# EUROPEAN PATENT SPECIFICATION

(11) **EP 3 258 790 B1**
(45) Date of publication and mention of the grant of the patent: **03.04.2019**
(21) Application number: 16708944.0
(22) Date of filing: 12.02.2016
(51) Int. Cl.: A23G 7/00, A23G 3/34, A23G 3/02, A23G 4/02, B26D 7/08, B26D 7/27

(54) **CUTTING AND SHAPING ASSEMBLY FOR CHEWING GUM, CANDY AND THE LIKE**
SCHNEIDEN UND FORMEN EINER ANORDNUNG FÜR KAUGUMMI, BONBONS UND DERGLEICHEN
ENSEMBLE DE COUPE ET DE FAÇONNAGE POUR GOMME À MÂCHER, BONBONS ET ANALOGUES

(30) Priority: 16.02.2015 IT BO20150071
(43) Date of publication of application: 27.12.2017
(73) Proprietor: Gima S.p.A., 40069 Zola Predosa (BO) (IT)
(72) Inventor: SASSI, Fabio, 40133 Bologna (IT)
(74) Representative: Modiano, Micaela Nadia
(86) International application number: PCT/EP2016/053048
(87) International publication number: WO 2016/131727

(56) References cited:
- EP-A2- 1 514 652
- FR-A1- 2 855 448
- GB-A- 733 375
- GB-A- 1 354 505
- US-A- 4 004 797
- US-A- 5 871 783
- US-B1- 6 368 647
- US-B1- 6 530 768

## Description

The present invention is defined by the claims and relates to a cutting and shaping assembly for chewing gum, candy and the like.

Chewing gum and candy are offered on the market with different shapes for the purpose of diversifying the products on offer and also in order to categorize the end product in specific families that are already known to the customers.

In particular, for chewing gum we can list products that are spherical, cylindrical, parallelepiped, plate-like, contoured, and irregular.

Most of these shapes of chewing gum can be obtained through cutting operations starting from a large block that has been conveniently processed.

The cutting operations performed on the material that constitutes the chewing gum are usually carried out by way of blades moved by special controlled actuators.

The movable blades will cut into the surface of the material to be cut while they slide on it: these movements will cause the separation of powders and small portions of material which, usually, will remain stuck to the surfaces of the blades.

After a prolonged use the blades will therefore be partially coated by the aforementioned residues of material and their operation can be seriously compromised.

It is therefore necessary to have periodic maintenance of the movable blades in order to remove the residues of material from them and from the components proximate to them (in fact processing remains could accumulate on the latter).

Maintenance implies planning periodic interruptions of the operation of the plant in which the cutting is carried out, and such interruptions result in a reduction in productivity.

The buildup of residues further increases the incidence of malfunctions, in that the possibility cannot be ruled out that the residues could cause jams or blockages.

Finally it must be noted that, at high productivity rates, the blades will make numerous cuts per time unit: the sliding of the blades on the material to be cut will cause the heating thereof by friction.

However, the materials that constitute the products being processed (chewing gum, candy) undergo major softening if exposed to the heat and they become sticky, making it almost impossible to cut them correctly.

For this reason the adoption of movable blades also implies a limitation on productivity (meaning the maximum number of products that can be processed in the unit of time) and/or the use of refrigeration assemblies for cooling the blades, the material to be processed and/or the entire environment in which the assembly is installed.

Obviously all the possibilities mentioned in the previous paragraph result in an increase in the production costs of the individual piece of chewing-gum and/or of the individual item of candy and the like. Apparatuses and methods utilising ultrasonic cutting systems for cutting confectionery materials are known in the prior art, as shown for example in US 5,871,783, US,530,768 B1 and US 6,368,647 B1.

The aim of the present invention is to solve the above mentioned drawbacks, by providing a cutting and shaping assembly for chewing gum, candy and the like on which no significant buildup of residues accumulates.

Within this aim, an object of the invention is to provide a cutting and shaping assembly for chewing gum, candy and the like which requires little maintenance.

Another object of the invention is to provide a cutting and shaping assembly for chewing gum, candy and the like which does not overheat the material to be cut, thus guarding against the adhesion thereof to the components of the assembly and/or the softening thereof.

Another object of the present invention is to provide a cutting and shaping assembly for chewing gum, candy and the like which is low cost, easily and practically implemented, and safe in use.

This aim and these objects are achieved by a cutting and shaping assembly for chewing gum, candy and the like, comprising a collection magazine for blanks, a conveyance line for said blanks in order to convey them from the exit opening of said magazine to an area for the pickup of the finished products, and two ultrasound cutting units arranged along said conveyance line, each said cutting unit being constituted by a vibrating cutting tool, also known as sonotrode, in which at least one cutting edge faces and is proximate to said conveyance line and its back is coupled to a piezoelectric transducer powered by an electric generator of a signal oscillating at a preset frequency, the two cutting units being arranged mutually opposite with respect to said conveyance line, each cutting unit being in a configuration of at least partial interference of at least one respective edge with at least one blank, the first ultrasound cutting unit being suspended above said conveyance line with at least one respective edge directed toward the top of said line, the second ultrasound cutting unit being suspended below said conveyance line with the at least one respective edge directed toward the bottom of said line; wherein in each ultrasound cutting unit at least one mechanical amplifier is interposed between said piezoelectric transducer and said vibrating cutting tool in order to increase the amplitude of the mechanical vibration generated by the transducer 13 and subsequently transmit it to the vibrating cutting tool.

Further characteristics and advantages of the invention will become better apparent from the detailed description that follows of a preferred, but not exclusive, embodiment of the cutting and shaping assembly for chewing gum, candy and the like according to the invention, which is illustrated by way of non-limiting example in the accompanying drawings, wherein:

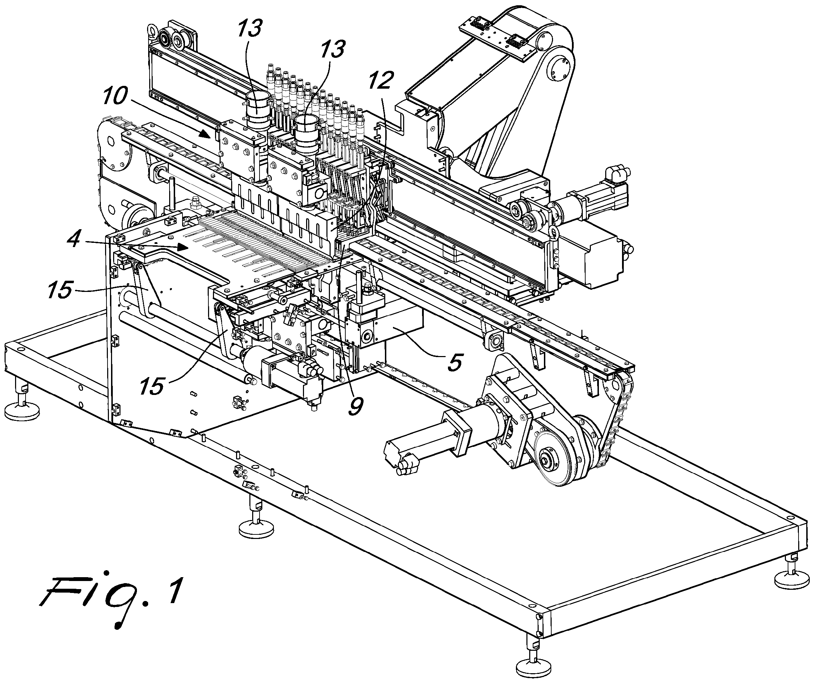

Figure 1 is a schematic perspective view of a machine provided with a cutting and shaping assembly for chewing gum, candy and the like according to the invention;

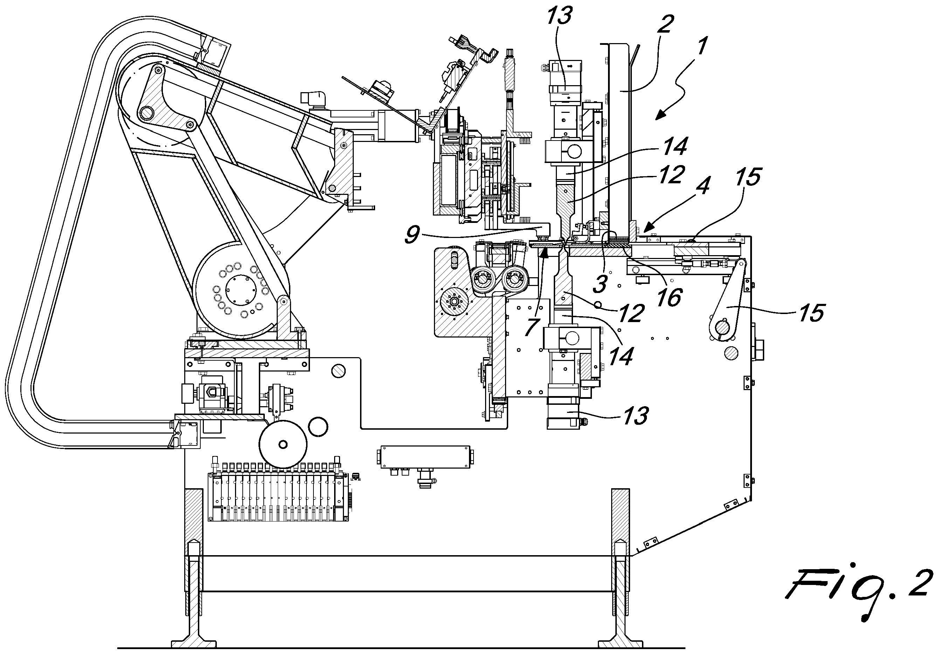

Figure 2 is a side view of the cutting and shaping assembly for chewing gum, candy and the like according to the invention;

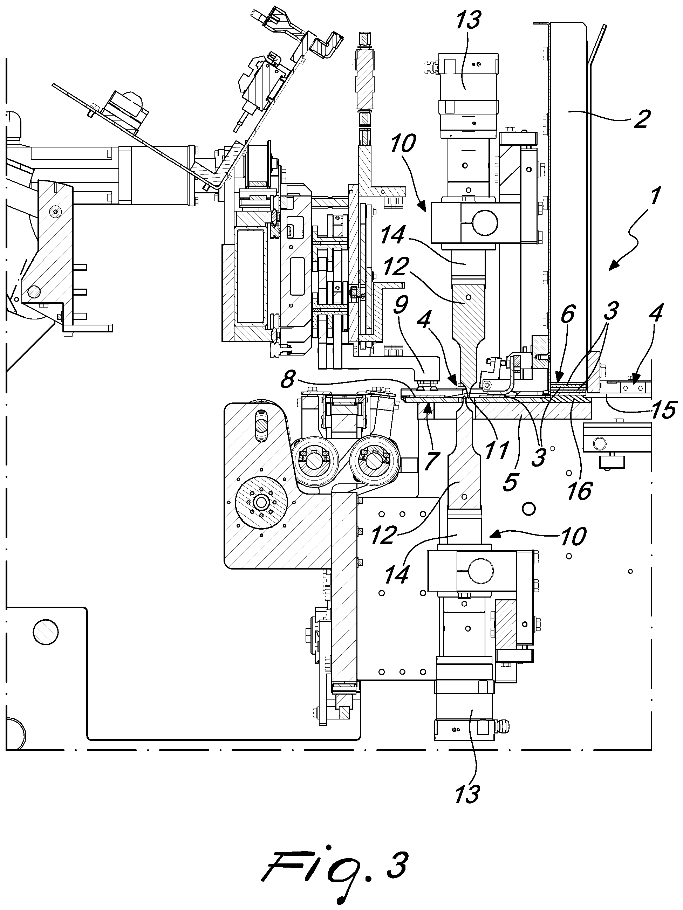

Figure 3 is an enlarged portion of Figure 2.

With reference to the figures, the reference numeral 1 generally designates a cutting and shaping assembly for chewing gum, candy and the like.

The cutting and shaping assembly 1 comprises a collection magazine 2 for blanks 3.

The blanks 3, in the embodiment shown by way of example in the accompanying figures, are bars of the material that constitutes the chewing gum and/or the candy.

The material that constitutes the chewing gum is usually constituted by a base gum, sugar (or sweeteners), additives and flavorings.

The material that constitutes the candy comprises high quantities of sugars and other components, mostly natural flavorings (such as for example lemon, orange, strawberry, liquorice), milk, cocoa, various forms of binding agents (like starch or gelatin) and, sometimes, artificial colors and flavorings.

The cutting and shaping assembly 1 further comprises a conveyance line 4 for the blanks 3: by using the line 4 it is possible to convey the blanks 3 from an exit opening 6 of the magazine 2 to an area 7 for the pickup of a finished products 8.

The conveyance line 4, and the magazine 2, are integral with the frame 5 of the installation apparatus.

The pickup of the products 8 can occur with the aid of grip means 9 which can be of the conventional type or specifically dedicated.

Usually, given the delicate nature of the products 8, it is preferable to use grip means 9 provided with suckers: clamping devices could in fact damage (notch) the surface of the products 8, compromising their aesthetic appearance.

The possibility is not ruled out however of adopting grip means 9 constituted by clamps for specific applications (optionally adopting precautions that safeguard the shape of the product).

According to the invention, the cutting and shaping assembly 1 comprises two ultrasound cutting units 10 arranged mutually opposite with respect to the conveyance line 4, each cutting unit being in a configuration of at least partial interference of at least one respective edge with at least one blank, the first ultrasound cutting unit being suspended above said conveyance line with at least one respective edge directed toward the top of said line, the second ultrasound cutting unit being suspended below said conveyance line with the at least one respective edge directed toward the bottom of said line.

More specifically, it is shown that each cutting unit 10 is constituted by a vibrating cutting tool 12 which is a sonotrode in which the at least one cutting edge 11 faces and is proximate to the conveyance line 4 and its back is coupled to a piezoelectric transducer 13 powered by an electric generator of a signal oscillating at a preset frequency. The oscillating signal generator, although not visible in the accompanying figures, is of the type traditionally used for supplying power to ultrasonic welding devices (according to methods that will be better explained hereinafter).

It is emphasized that, in order to ensure an optimal operation and a good cutting efficiency, according to the invention, at least one mechanical amplifier 14 is interposed between each piezoelectric transducer 13 and each vibrating cutting tool 12 in order to increase the amplitude of the mechanical vibration generated by the transducer 13 and subsequently transmit it to the tool 12.

This particular implementation configuration is entirely similar to that used for ultrasonic welding, and the cutting unit 10 therefore is constituted by a component known as a sonotrode (constituted by the vibrating tool 12) and by its power supply assemblies which are adapted to provide vibration energy (i.e. the generator of the oscillating electrical signal, the piezoelectric transducer 13 and the mechanical amplifier 14).

In order to identify the characteristics of these components with precision, the following is a brief description of them.

The oscillating electrical signal generator dispenses high voltage energy pulses, which are transmitted to the piezoelectric transducer 13 and converted to longitudinal mechanical vibrations of ultrasonic frequency. The most important requirements of the generator are: constant amplitude, in order to obtain reproducible results; automatism of scanning of the frequencies; continuous operation; continuous adjustment of the power, and adjustment of the pulses.

The possibility of executing a scan of the frequencies of the emitted signal ensures the calibration on frequency values that are resonant for all the components involved.

The piezoelectric transducer 13 (ultrasound converter) is the main component and its function is to convert electric power to mechanical energy. This occurs with the aid of blocks of piezoceramic arranged inside it. This piezoceramic is artificially polarized and reacts to applied voltage by modifying its geometric dimension.

If a high frequency alternating voltage is applied, in the piezoelectric transducer 13 there will be a modification of the length, as a function of the voltage and of the frequency. If a given alternating voltage is applied, the transducer 13 acts as an impulse generator and is capable of "energizing" the resonant frequencies of the vibrating tool. Therefore, definitively, piezoelectric materials subjected to an alternating voltage expand and contract with the variation of the sign of the voltage.

Very small piezoelectric materials, if subjected to voltages of the order of kV, can develop very great forces (up to 5 kN) for small movements (100 µm) or smaller forces (50 N) for greater movements (1000000 µm).

The polarized materials, which have become piezoelectric, are however strongly anisotropic, having low resistance to shear, traction and torque mechanical stresses. It follows that it is preferable to position the transducer 13 vertically, or, alternatively, to fix it so that it is subject only to compression. Furthermore, temperatures higher than the Curie temperature make the crystals lose their orientation and therefore their piezoelectricity.

Previously the power supply voltage was defined as alternating, but its frequency was not defined. The frequency of the vibration oscillations is linked to the geometric characteristics of the amplifier 14 and of the vibrating tool 12: such parameter is uniquely defined for a specific cutting unit 10 and is its resonant frequency.

The function of the amplifier 14 is twofold: to increase the amplitude of vibration and to provide the mechanical connection between the vibrating tool 12 (which can also be called a sonotrode) and the transducer 13. As mentioned previously, the amplifier 14 is characterized by the specific resonant frequency, which is linked to the geometry of the cutting unit 10 (in particular of the tool 12, also known as a sonotrode). In this regard, for the good operation of the cutting unit 10 as a whole, it is advisable that the temperature during the operation does not exceed 40 °C. In fact, heating would lead to the dilation of the material, with consequent variation of the geometry and therefore of the resonant frequency.

The cutting tool 12, known as a sonotrode, is the most critical part of the ultrasound cutting unit 10 (it should be noted that in the known art a sonotrode has never been used as a cutting unit for confectionery products such as candy and chewing gum, and also, especially for the latter, the adoption of the sonotrode is particularly advantageous).

Compression and dilatation waves are propagated through the cutting tool 12 and put the strength of the material under severe stress (it must have an excellent fatigue strength).

The cutting tool 12, or sonotrode, has the following functions:
- transmission of the vibration energy;
- transmission of the contact force;
- conversion of the amplitude of the vibration.

The materials with which the tools 12 (sonotrodes) are constructed are constituted mostly by steel, aluminum and titanium, materials which make it possible to transmit mechanical vibration without great loss of power (in an iron sonotrode most of the mechanical energy would be dispersed as heat).

If there are limited energies in play, aluminum can be chosen as it is excellent in terms of low absorption of sound energy; however for high pressure loads it is necessary to choose steel or if possible titanium, which, compared to the latter, has a lower absorption of sound energy.

The shape and the length of the sonotrode (or cutting tool 12) are designed so that the mechanical resonant frequency of the sonotrode coincides with that of the mechanical vibration generated by the transducer 13, so as to render the transfer thereof more efficient.

Therefore there are specific design restrictions on making a sonotrode (or cutting tool 12), and if these are not followed the sonotrode will break, or secondary, transverse vibrations will occur which are not used in the cutting process and which will disperse unused energy.

The sonotrode (or cutting tool 12) effectively performs the cutting of the blank 3 by incising its surface during its advancement on the conveyance line 4: the frequency of vibration determines the efficiency of the cut.

Since the cutting tool 12 is subject to wear, the at least one cutting edge 11 may need to be corrected: if more than one tenth of a millimeter overall is to be removed, the resonant frequency of the piece will change and a new calibration (to the new resonant frequency) will then be necessary.

"Tuning" the sonotrode (or cutting tool 12), in order to calibrate it to the desired resonant frequency, is done by removal of material, so as to further modify its geometry.

These operations are usually carried out by the maker of the entire cutting unit 10 because changing the frequency of the sonotrode (or cutting tool 12) means that it will no longer respond correctly to the stresses of the transducer 13 which, in order to compensate for this fall in amplitude, will have to supply more power. The result is that, in the best case, there will be a worsening of the cut (the surfaces may be irregular and not perfectly separated); in any case it cannot be ruled out that such conditions of malfunctioning could result in the breakage of the transducer 13.

The innovative characteristic of the cutting and shaping assembly 1 according to the invention is the adoption of a sonotrode (or cutting tool 12) and of the components controlled by it (generator of the electrical signal oscillating at preset frequencies, piezoelectric transducer 13 and amplifier 14), a device currently used for welding polymeric materials and never, until now, used to execute cutting operations on blanks 3 intended to become chewing gum and/or candy.

It should be noted that, according to the invention, the cutting tools 12 are two in number, arranged mutually opposite with respect to the conveyance line 4, both in a configuration of at least partial interference of at least one respective edge 11 of each one of them with at least one blank 3. However the possibility is not ruled out in any case of adopting only one cutting tool 12 (sonotrode) which operates in total interference with the blank 3. This embodiment with only one cutting tool 12 does not form part of the invention.

A first tool 12 is suspended above the conveyance line 4 with the at least one respective edge 11 directed toward the top of the line 4, and a second tool 12 is suspended below the conveyance line 4 with the at least one respective edge 11 directed toward the bottom of the line 4.

The two tools 12 in such case can be perfectly aligned.

Indeed it has been found that it is possible to obtain a better quality of the cut executed by the units 10 if they are staggered (in the advancement direction of the blanks 3 on the line 4) by a preset distance (determined, among other things, by the advancement speed of the blank 3 on the line 4).

Furthermore the staggering ensures that the cutting edges 11 of the two different cutting tools 12 (sonotrodes) cannot in any way mutually interfere as a result of the vibrations: if they interfered with each other there would be immediate damage to the edges 11.

The staggering can vary from values of less than a millimeter up to several tens of millimeters according to the advancement speed of the blanks 3, their shape and the material that constitutes them.

It should further be noted that the cutting tools 12 (sonotrodes) can comprise an end front provided with a plurality of aligned and distributed cutting edges 11: each edge 11, in such case, will at least partially interfere with the blank 3, placed on the conveyance line 4, during its transfer from the exit 6 of the magazine 2 to an area 7 for the pickup of the finished products 8.

The end front of the cutting tools 12 (sonotrodes) will therefore be shaped like a comb, the teeth of which are constituted by the cutting edges 11.

As, according to the invention, the cutting tools 12 (sonotrodes) are two in number (mutually opposite with respect to the line 4), the edges 11 of each tool 12 (sonotrode) will be aligned with corresponding edges 11 of the other, opposite tool 12 (sonotrode).

A pusher 15 is arranged along the conveyance line 4 for the blanks 3, upstream of the exit 6 of the magazine 2.

The end front of the pusher 15 can move from a first, retracted configuration of substantial alignment with the edge of the exit opening 6 of the magazine 2 to a second, extended configuration of substantial juxtaposition against the edge of the pickup area 7 of the finished products 8.

More specifically it should be specified that, according to an embodiment of undoubted interest in terms of practical implementation, the magazine 2 can accommodate the mutually stacked blanks 3 and the opening 6 can be arranged at the lower end of the magazine 2 thus formed: the opening 6 will therefore be facing and proximate to the initial portion of the conveyance line 4.

With reference to the embodiments described previously, it should be noted that the initial portion of the conveyance line 4, aligned with the opening 6 of the magazine 2, comprises a toothed slider 16 for accommodating at least one blank 3 at a time.

The end front of the pusher 15 will in such case be constituted by a plurality of tabs arranged side by side and adapted to slide in the cavities defined between the contiguous teeth by the toothed slider 16.

The tabs of the end front of the pusher 15, with reference to an embodiment that is very efficient and functional, comprise a first band, which is higher than the height of the teeth of the toothed slider 16, and a second band, which is lower than the height of the teeth of the toothed slider 16. Each first band will be proximate to the fixed frame of the pusher 15 (i.e. the part substantially opposite the end front), the corresponding second band will on the other hand be integral with the end of the first band.

In this manner a first advancement of the pusher will determine the abutment of the end edge of the first band against the side surface of a blank 3: the advancement of the end front of the pusher 15 determines an advancement of the first bands of the respective tabs, with corresponding translation of a first blank 3 until it protrudes from the slider 16 and falls on the second bands of the tabs.

A retraction of the end front of the pusher 16 determines the placing of the first blank 3 (which earlier was accommodated on the second band of the tabs) on the surface of the conveyance line 4 and the placing of a second blank 3 arranged at the lower level of the magazine 2 (i.e. proximate to the opening 6) on the toothed slider 16.

A further advancement of the end front of the pusher 15 determines the translation of the first blank 3 (following the abutment of the end edge of the second bands of the tabs against the side wall of the first blank 3), until aligning it with the area for picking up 7 (passing through the cutting edges 11 of the tools 12, i.e. the sonotrodes).

In the meantime the second blank 3 advances along the toothed slider 16 until it falls on the second bands of the tabs of the pusher 15.

At each cycle of operation the pusher 15 will translate a first blank 3 (passing through the cutting tools 12, sonotrodes) until the finished products 8 are obtained and they are aligned with an area for picking up 7; the pusher 15 in the same cycle will extract a second blank 3 from the magazine 2 and advance it until it gets past the slider 16.

The present invention identifies as the predominant part of its innovative content the original idea of using at least one sonotrode (cutting tool 12) to cut and divide products 8 for food use, such as chewing gum, candy and the like.

The sonotrodes are used in the known art predominantly as ultrasound welders for polymers, their use as cutting tools 12 for chewing gum and/or candy is therefore decidedly original and cannot be derived from the state of the art.

The many advantages deriving from the use of sonotrodes as cutting tools 12 for chewing gum and/or candy are predominantly linked to the fact that buildups of residues of material on the tools 12 do not occur (the high frequency vibration motion prevents the adhesion of material, the deposit of which is in any case removed by the passage of the subsequent blanks 3).

The absence of unwanted accumulations implies the need for fewer maintenance interventions.

Furthermore, since the sonotrodes (cutting tools 12) are not subject to the heavy pressure usually expected for welding operations, they will have a very long average lifetime, owing to the light load to which they will be subj ected.

It is necessary to specify that the sonotrode used for cutting the blanks 3 made of material for food use (for chewing gum and/or candy and the like) comprises a true vibrating tool 12 which has at least one cutting flap 11 and has its back coupled to a piezoelectric transducer 13 powered by an electric generator of a signal oscillating at a preset frequency.

A vibration amplifier 14 is interposed between the piezoelectric transducer 13 and the vibrating tool 12.

Advantageously the present invention solves the above mentioned problems, by providing a cutting and shaping assembly 1 for chewing gum, candy and the like (finished products 8) on which no significant buildup of residues accumulates. As previously explained, in fact, the ultrasonic vibrations to which the tool 12 is subjected (and with it its cutting edges 11), are such as to guard against the deposit of residues of material thereon.

Conveniently the cutting and shaping assembly 1 for chewing gum, candy and the like requires little maintenance, in that the components that make it up are subjected to low mechanical stresses and they do not accumulate residues om their surfaces.

Profitably the cutting and shaping assembly 1 does not lead to the overheating of the material to be cut, thus guarding against the adhesion thereof to the components of the assembly and/or against their softening.

In fact the high frequency of the vibrations minimizes the heating of the surfaces of the cutting tools 12, for the same reason that the material to be cut (since it remains in contact with such surfaces for an extremely short time) is not heated thereby.

Conveniently the cutting and shaping assembly 1 according to the invention can be made at low cost and relatively easily, therefore determining the safe application of the inventive concept identified thereby.

## Claims

1. A cutting and shaping assembly for chewing gum, candy and the like, comprising a collection magazine (2) for blanks (3), a conveyance line (4) for said blanks (3) in order to convey them from the exit opening (6) of said magazine (2) to an area (7) for the pickup of the finished products (8), and two ultrasound cutting units (10) arranged along said conveyance line (4), each said cutting unit (10) being constituted by a vibrating cutting tool being a sonotrode (12) in which at least one cutting edge (11) faces and is proximate to said conveyance line (4) and its back is coupled to a piezoelectric transducer (13) powered by an electric generator of a signal oscillating at a preset frequency,
**characterized in that** said two cutting units (10) are arranged mutually opposite with respect to said conveyance line (4), each cutting unit (10) being in a configuration of at least partial interference of at least one respective edge (11) with at least one blank (3), the first ultrasound cutting unit (10) being suspended above said conveyance line (4) with the at least one respective edge (11) directed toward the top of said line (4), the second ultrasound cutting unit (10) being suspended below said conveyance line (4) with the at least one respective edge (11) directed toward the bottom of said line (4); wherein in each ultrasound cutting unit (10) at least one mechanical amplifier (14) is interposed between said piezoelectric transducer (13) and said vibrating cutting tool (12) in order to increase the amplitude of the mechanical vibration generated by the transducer 13 and subsequently transmit it to the vibrating cutting tool (12).

2. The cutting and shaping assembly according to claim 1, **characterized in that** said each ultrasound cutting unit (10) comprises an end front provided with a plurality of aligned and distributed cutting edges (11), each at least one said edge (11) interfering at least partially with said blank (3), placed on said conveyance line (4), during its transfer from the exit opening (6) of said magazine (2) to an area (7) for the pickup of the finished products (8).

3. The cutting and shaping assembly according to claim 1, **characterized in that** it comprises a pusher (15) arranged along said conveyance line (4) for said blanks (3) upstream of the exit opening (6) of said magazine (2), the end front of said pusher (15) being movable from a first, retracted configuration of alignment with the edge of the exit opening (6) of said magazine (2) to a second, extended configuration of substantial juxtaposition against the edge of the pickup area (7) of the finished products (8).

4. The cutting and shaping assembly according to claim 1, **characterized in that** said magazine (2) accommodates the mutually stacked blanks (3) and said opening (6) is arranged at the lower end of said magazine (2), which faces and is proximate to the initial portion of said conveyance line (4).

5. The cutting and shaping assembly according to any one of the preceding claims, **characterized in that** the initial portion of said conveyance line (4), aligned with the opening (6) of said magazine (2), comprises a toothed slider (16) for accommodating at least one blank (3) at a time, the end front of said pusher (15) being constituted by a plurality of tabs arranged side by side and adapted to slide in the cavities defined between the teeth of said toothed slider (16).

6. The cutting and shaping assembly according to any one of the preceding claims, **characterized in that** said tabs comprise a first band, which is higher than the height of the teeth of said toothed slider (16), and a second band, which is lower than the height of the teeth of said toothed slider (16), each said first band being proximate to the fixed frame of said pusher (15), the corresponding second band being integral with the end of said first band.

## Patentansprüche

1. Eine Anordnung zum Schneiden und Formen von Kaugummi, Bonbons und dergleichen, die Folgendes umfasst: ein Sammelmagazin (2) für Rohlinge (3), ein Förderband (4) für die Rohlinge (3), um sie von der Austrittsöffnung (6) des Magazins (2) in einen Bereich (7) zur Aufnahme der fertigen Produkte (8) zu befördern, und zwei Ultraschall-Schneideinheiten (10), angeordnet entlang dem Förderband (4), wobei jede Schneideinheit (10) aus einem Schwing-Schneidwerkzeug besteht, das eine Sonotrode (12) ist, wobei mindestens eine Schneidkante (11) dem Förderband (4) zugewandt ist und an dasselbe angrenzt und ihre Rückseite mit einem piezoelektrischen Wandler (13) gekoppelt ist, der von einem elektrischen Generator mit einem Signal, das mit voreingestellter Frequenz schwingt, mit Strom versorgt wird;
**dadurch gekennzeichnet, dass** die beiden Schneideinheiten (10) mit Bezug auf das Förderband (4) einander gegenüber angeordnet sind, wobei jede Schneideinheit (10) sich in einer Anordnung zumindest partiellen Eingriffs mindestens einer entsprechenden Kante (11) mit mindestens einem Rohling (3) befindet; wobei die erste Ultraschall-Schneideinheit (10) über dem Förderband (4) angeordnet ist, wobei die mindestens eine entsprechende Kante (11) der Oberseite des Bandes (4) zugewandt ist, wobei die zweite Ultraschall-Schneideinheit (10) unterhalb des Förderbandes (4) angeordnet ist, wobei die mindestens eine entsprechende Kante (11) der Unterseite des Bandes (4) zugewandt ist;
wobei in jeder Ultraschall-Schneideinheit (10) mindestens ein mechanischer Verstärker (14) zwischen dem piezoelektrischen Wandler (13) und dem Schwing-Schneidwerkzeug (12) angeordnet ist, um die Amplitude der mechanischen Schwingung, die vom Wandler (13) erzeugt wird, zu vergrößern und sie anschließend an das Schwing-Schneidwerkzeug (12) zu übertragen.

2. Die Anordnung zum Schneiden und Formen gemäß Anspruch 1, **dadurch gekennzeichnet, dass** jede Ultraschall-Schneideinheit (10) ein vorderes Ende umfasst, das mit einer Vielzahl ausgerichteter und verteilter Schneidkanten (11) ausgestattet ist, wobei jede der mindestens einen Kanten (11) zumindest teilweise in den auf das Förderband (4) platzierten Rohling (3) während seines Transports von der Austrittsöffnung (6) des Magazins (2) in einen Bereich (7) zur Aufnahme der fertigen Produkte (8) eingreift.

3. Die Anordnung zum Schneiden und Formen gemäß Anspruch 1, **dadurch gekennzeichnet, dass** sie einen entlang dem Förderband (4) für die Rohlinge (3) stromaufwärts von der Austrittsöffnung (6) des Magazins (2) angeordneten Schieber (15) umfasst, wobei das vordere Ende des Schiebers (15) beweglich ist aus einer ersten, zurückgezogenen Anordnung des Fluchtens mit der Kante der Austrittsöffnung (6) des Magazins (2) in eine zweite, ausgefahrene Anordnung wesentlicher Nebeneinanderstellung mit der Kante des Aufnahmebereichs (7) der fertigen Produkte (8).

4. Die Anordnung zum Schneiden und Formen gemäß Anspruch 1, **dadurch gekennzeichnet, dass** das Magazin (2) die übereinander gestapelten Rohlinge (3) enthält und die Öffnung (6) am unteren Ende des Magazins (2) angeordnet ist, das dem Anfangsabschnitt des Förderbandes (4) zugewandt ist und an ihn angrenzt.

5. Die Anordnung zum Schneiden und Formen gemäß einem beliebigen der obigen Ansprüche, **dadurch gekennzeichnet, dass** der Anfangsabschnitt des Förderbandes (4), fluchtend mit der Öffnung (6) des Magazins (2), einen gezahnten Schieber (16) für die Aufnahme mindestens eines Rohlings (3) zur Zeit umfasst, wobei das vordere Ende des Schiebers (15) aus einer Vielzahl von Nasen besteht, die nebeneinander angeordnet und ausgebildet sind, um in den Hohlräumen zu gleiten, die zwischen den Zähnen des gezahnten Schiebers (16) bestimmt sind.

6. Die Anordnung zum Schneiden und Formen gemäß einem beliebigen der obigen Ansprüche, **dadurch gekennzeichnet, dass** die Nasen einen ersten Bund umfassen, der höher ist als die Zähne des gezahnten Schiebers (16), und einen zweiten Bund, der niedriger ist als die Zähne des gezahnten Schiebers (16), wobei jeder erste Bund an den festen Rahmen des Schiebers (15) angrenzt, wobei der entsprechende zweite Bund integral mit dem Ende des ersten Bundes ist.

## Revendications

1. Ensemble de coupe et de façonnage pour de la gomme à mâcher, des bonbons et analogues, comportant un magasin de collecte (2) pour des ébauches (3), une ligne de transport (4) pour lesdites ébauches (3) afin de les transporter depuis l'ouverture de sortie (6) dudit magasin (2) jusqu'à une zone (7) pour le ramassage des produits finis (8), et deux unités de coupe à ultrasons (10) agencées le long de ladite ligne de transport (4), chaque dite unité de coupe (10) constituée d'un outil de coupe vibrant étant une sonotrode (12) dans laquelle au moins un bord coupant (11) est dirigée vers ladite ligne de transport (4) et à proximité de celle-ci et son arrière est couplé à un transducteur piézoélectrique (13) alimenté par un générateur électrique d'un signal oscillant à une fréquence préétablie,
**caractérisé en ce que** lesdites deux unités de coupe (10) sont agencées mutuellement opposées par rapport à ladite ligne de transport (4), chaque unité de coupe (10) étant dans une configuration d'interférence au moins partielle d'au moins un bord (11) respectif avec au moins une ébauche (3), la première unité de coupe à ultrasons (10) étant suspendue au-dessus de ladite ligne de transport (4) avec le au moins un bord (11) respectif dirigé vers le dessus de ladite ligne (4), la seconde unité de coupe à ultrasons (10) étant suspendue au-dessous de ladite ligne de transport (4) avec le au moins un bord (11) respectif dirigé vers le dessous de ladite ligne (4),
dans lequel dans chaque unité de coupe à ultrasons (10), au moins un amplificateur mécanique (14) est intercalé entre ledit transducteur piézoélectrique (13) et ledit outil de coupe vibrant (12) afin d'augmenter l'amplitude de la vibration mécanique générée par le transducteur (13) et de la transmettre ensuite à l'outil de coupe vibrant (12).

2. Ensemble de coupe et de façonnage selon la revendication 1, **caractérisé en ce que** chaque dite unité de coupe à ultrasons (10) comporte une extrémité avant pourvue d'une pluralité de bords coupants alignés et répartis (11), chaque dit au moins un bord (11) interférant au moins en partie avec ladite ébauche (3), placée sur ladite ligne de transport (4), pendant son transfert depuis l'ouverture de sortie (6) dudit magasin (2) jusqu'à une zone (7) pour le ramassage des produits finis (8).

3. Ensemble de coupe et de façonnage selon la revendication 1, **caractérisé en ce qu'**il comporte un poussoir (15) agencé le long de ladite ligne de transport (4) pour lesdites ébauches (3) en amont de l'ouverture de sortie (6) dudit magasin (2), l'extrémité avant dudit poussoir (15) étant mobile depuis une première configuration rétractée d'alignement avec le bord de l'ouverture de sortie (6) dudit magasin (2), jusqu'à une seconde configuration étendue de juxtaposition substantielle contre le bord de la zone de ramassage (7) des produits finis (8).

4. Ensemble de coupe et de façonnage selon la revendication 1, **caractérisé en ce que** ledit magasin (2) reçoit les ébauches mutuellement empilées (3) et ladite ouverture (6) est agencée à l'extrémité inférieure dudit magasin (2), qui est dirigée vers la partie initiale de ladite ligne de transport (4) et est à proximité de celle-ci.

5. Ensemble de coupe et de façonnage selon l'une quelconque des revendications précédentes, **caractérisé en ce que** la partie initiale de ladite ligne de transport (4), alignée avec l'ouverture (6) dudit magasin (2), comporte une coulisse dentée (16) pour recevoir au moins une ébauche (3) à la fois, l'extrémité avant dudit poussoir (15) étant constituée d'une pluralité de languettes agencées côte à côte et adaptées pour coulisser dans les cavités définies entre les dents de ladite coulisse dentée (16).

6. Ensemble de coupe et de façonnage selon l'une quelconque de revendications précédentes, **caractérisé en ce que** lesdites languettes comportent une première bande, qui est plus haute que la hauteur des dents de ladite coulisse dentée (16), et une seconde bande, qui est plus basse que la hauteur des dents de ladite coulisse dentée (16), chaque dite première bande étant à proximité du châssis fixe dudit poussoir (15), la seconde bande correspondante étant solidaire de l'extrémité de ladite première bande.
